(19) Europäisches Patentamt
European Patent Office
Office européen des brevets

(11) **EP 1 111 393 B1**

(12) **EUROPÄISCHE PATENTSCHRIFT**

(45) Veröffentlichungstag und Bekanntmachung des Hinweises auf die Patenterteilung:
**23.05.2007 Patentblatt 2007/21**

(51) Int Cl.:
*G01P 3/56* *(2006.01)*      *G01P 3/64* *(2006.01)*

(21) Anmeldenummer: **00125207.1**

(22) Anmeldetag: **22.11.2000**

(54) **Verfahren und Vorrichtung zum Ermitteln der Relativgeschwindigkeit zwischen zwei Fahrzeugen**

Method and device for detection of relative speed between two vehicles

Méthode et dispositif de détermination de la vitesse relative entre deux véhicules

(84) Benannte Vertragsstaaten:
**AT BE CH CY DE DK ES FI FR GB GR IE IT LI LU MC NL PT SE TR**

(30) Priorität: **22.12.1999 DE 19962022**

(43) Veröffentlichungstag der Anmeldung:
**27.06.2001 Patentblatt 2001/26**

(73) Patentinhaber: **Volkswagen Aktiengesellschaft 38436 Wolfsburg (DE)**

(72) Erfinder:
• **Andreas, Peter, Dipl.-Ing.**
  **38518 Gifhorn (DE)**
• **Ruchatz, Thomas, Dipl.-Ing.**
  **38165 Lehre (DE)**
• **Schaper, Friedrich-Wilhelm**
  **38118 Braunschweig (DE)**
• **Rabba, Heiko**
  **D-38102 Braunschweig (DE)**

(56) Entgegenhaltungen:
**US-A- 5 053 979          US-A- 5 678 650**
**US-A- 5 708 584          US-A- 5 805 103**

• **PATENT ABSTRACTS OF JAPAN vol. 1998, no. 01, 30. Januar 1998 (1998-01-30) & JP 09 230036 A (NISSAN MOTOR CO LTD), 5. September 1997 (1997-09-05)**
• **PATENT ABSTRACTS OF JAPAN vol. 1999, no. 09, 30. Juli 1999 (1999-07-30) & JP 11 101637 A (AISIN SEIKI CO LTD), 13. April 1999 (1999-04-13)**

**Beschreibung**

Die Erfindung betrifft ein Verfahren und eine Vorrichtung zum Ermitteln der Relativgeschwindigkeit zwischen zwei Fahrzeugen mit den Schritten Messen des Abstandes zwischen den Fahrzeugen zu definierten Taktzeitpunkten, welche jeweils im Abstand einer Zeiteinheit aufeinander folgen und Berechnen der Relativgeschwindigkeit als Differenzenquotient aus der Differenz zwischen zwei gemessenen Abstandswerten und dem zwischen den beiden Abstandswerten liegenden Zeitintervall.

Aus dem Stand der Technik sind derartige Verfahren zur Ermittlung der Relativgeschwindigkeit, insbesondere für den Einsatz in Fahrzeugleitsystemen mit Abstandsregelung bekannt. Fig. 3 zeigt den Aufbau einer bekannten Abstandsregelung. Ziel dieser Abstandsregelung ist es, den Abstand zwischen zwei Fahrzeugen auf einen Sollabstand asoll einzuregeln. Der vorgegebene Sollabstand asoll n wird im Rahmen der Regelung zum Zeitpunkt n mit einem gemessenen Istabstand aist n verglichen und die festgestellte Regeldifferenz e wird als Eingangssignal einer Regeleinrichtung 30, z.B. einem PI-Regler zugeführt. Die Regeleinrichtung 30 ermittelt auf Grundlage der festgestellten Regeldifferenz e sowie weiterer Regelparameter, wie z.B. der Relativgeschwindigkeit Vrel n zwischen den Fahrzeugen, eine Stellgröße s, welche als Eingangsgröße für ein Stellglied 32 in dem hinteren der beiden Fahrzeuge (nachfolgend nur noch als Fahrzeug bezeichnet) dient. Die Stellgröße s ist dabei so bemessen, daß sie über das Stellglied 32 eine Einstellung des Abstandes zwischen den beiden Fahrzeugen auf den vorgegebenen Sollabstand asoll n bewirkt.

Der so korrigierte tatsächliche Abstand zwischen den beiden Fahrzeugen wird als Regelgröße a von einem Sensor 34 erfaßt und nachfolgend von einer Entscheidungsstufe 36 ausgewertet. Die Entscheidungsstufe 36 wertet den von dem Sensor bereitgestellten Meßwert dahingehend aus, ob ein plötzlicher Zielverlust eingetreten ist oder nicht. Ein Zielverlust zeigt sich daran, daß das von dem Sensor bereitgestellte Abstandssignal den fiktiven Wert Null annimmt. Wird kein Zielverlust festgestellt, so wird der von dem Sensor bereitgestellte Meßwert akzeptiert und als AbstandsIstwert aist n für einen erneuten Vergleich mit dem Sollabstand asoll n bereitgestellt. Ist jedoch ein Zielverlust, d.h. ein fiktiver Abstandswert Null festgestellt worden, so wird statt dessen ein berechneter Schätzwert aschätz n von einer Schätzeinrichtung 38 für einen Vergleich mit dem vorgegebenen Sollabstand asoll bereitgestellt. Der von der Schätzeinrichtung 38 berechnete Schätzwert aschätz n basiert auf der Annahme, daß das vorausfahrende Fahrzeug seine Geschwindigkeit nicht ändert. Die Schätzeinrichtung ist solange aktiv, bis entweder der Ort erreicht ist, an dem das vorausfahrende Fahrzeug als Ziel das letzte Mal erfaßt wurde oder bis ein neues Abstandssignal erfaßt wird. Sobald ein neues Abstandssignal aist n > 0 von dem Sensor bereitgestellt wird, wird dieses sofort wieder anstelle des Schätzwertes für den Vergleich mit dem Sollabstand asoll n zur Verfügung gestellt. Wenn jedoch auch nach einer vorbestimmten Zeit kein neues Abstandssignal aist n > 0 von dem Sensor ausgegeben wird, tritt die gesamte Abstandsregelung außer Kraft und das Fahrzeug wird bis zu einem Eingriff durch den Fahrer mit seiner zuletzt eingestellten Eigengeschwindigkeit weiter bewegt.

Die Parameter der Regeleinrichtung 30 werden über den Abstand zum Zielfahrzeug adaptiert. So ist es möglich, den Regler bei kleinen Abständen mit einer höheren Verstärkung zu applizieren als bei großen Abständen, was einer realen Fahrweise nahekommt. Die Parameter werden so appliziert, daß bei stationärer Fahr kein Abstandsschwingen entsteht (hohe Dämpfung) und andererseits die Reaktion ausreicht, um bei einem bremsenden vorausfahrenden Fahrzeug noch stark genug zu verzögern, um nicht auf das vorausfahrende Fahrzeug aufzufahren.

Die von dem Sensor 34 gemäß Fig. 3 bereitgestellten Abstandsdaten sind nicht immer zuverlässig; sie können mitunter verrauscht, stark verzögert oder sogar zeitweise ganz ausgefallen sein. Derartig gestörte Daten sind für die in Fig. 3 gezeigte Abstandsregelung nicht tauglich, weil sie zu falschen Regel- oder Berechnungsergebnissen führen würden. Wie bereits oben angedeutet, werden zeitweise ausgefallene Daten zwar teilweise durch die Schätzeinrichtung 38 korrigiert, jedoch verhindert der Schätzer keine falschen Berechnungen aufgrund von verrauschten oder verzögerten Abstandsdaten.

US-A-5 805 103 beschreibt ein System zur Überwachung des Abstandes zweier Fahrzeuge, wobei mittels der Bestimmung der Relativgeschwindigkeit zwischen den Fahrzeugen entschieden werden kann, ob das vorausfahrende Fahrzeug relativ zum Beobachtungsfahrzeug beschleunigt oder verzögert, um gegebenenfalls einen Bremsvorgang einleiten zu können.

Ebenso wird in US-A-5 708 584 ein System zur Bestimmung des Zustandes eines vorausfahrenden Fahrzeugs beschrieben, in dem mittels Radar ein vorausfahrendes Objekt erkannt und durch die Bestimmung der Relativgeschwindigkeit bestimmt wird, ob eine Kollisionswarnung mit gegebenenfalls Einleiten eines Bremsvorgangs bewirkt wird.

Es ist daher die Aufgabe der Erfindung, ein Verfahren und eine Vorrichtung zum Ermitteln der Relativgeschwindigkeit zwischen zwei Fahrzeugen derart variabel auszubilden, daß in einer Anlaufphase nach einem erstmaligen Erfassen des Abstandes zwischen den zwei Fahrzeugen die Werte für die Relativgeschwindigkeit einerseits schnell verfügbar, andererseits aber auch möglichst zuverlässig sind.

Diese Aufgabe wird für das Verfahren der eingangs genannten Art in der Weise gelöst, daß nach einem erstmaligen Erfassen des Abstandes aist 0 mit aist 0 > 0 zwischen den Fahrzeugen zum Zeitpunkt n = 0 die Berechnung der Relativgeschwindigkeit Vrel n für nachfolgende Zeitpunkte n mit $k > n \geq 1$ und mit k als einer vorbestimmten ganzen Zahl, variabel gemäß der Formel Vrel $n = \dfrac{a_{\text{ist } n} - a_{\text{ist } 0}}{n \cdot \Delta t}$ erfolgt.

Bei einer derartigen Ausgestaltung des Verfahrens kann ein erster Wert für die Relativgeschwindigkeit bereits bei Vorliegen von zwei Abstandswerten ermittelt werden. Weitere Werte für die Relativgeschwindigkeit werden zu nachfolgenden Taktzeitpunkten jeweils auf Basis des zuletzt und des zuerst gemessenen Abstandswertes bestimmt, wobei sich das Zeitintervall zwischen den jeweils verwendeten Abstandswerten sukzessive um eine Zeiteinheit vergrößert. Auf diese Weise wird während einer Anlaufphase des Verfahrens, nach einem erstmaligen Erfassen eines Abstandes a0, die Relativgeschwindigkeit variabel auf Basis von Abstandswerten ermittelt, die sukzessive weiter auseinander liegen.

Diese variable Berechnung der Relativgeschwindigkeit bietet einerseits den Vorteil, daß bereits sehr schnell, d.h. bei Vorliegen von mindestens zwei Abstandswerten, ein Wert für die Relativgeschwindigkeit und damit eine Berechnungsgrundlage für den Sollabstand als Führungsgröße für eine Abstandsregelung zur Verfügung steht. Andererseits bietet die variable Berechnung durch die Berücksichtigung von zeitlich zunehmend weiter auseinander liegenden Abstandswerten eine Art Filterfunktion oder Mittelwertbildung über mehrere Meßzeitpunkte, wodurch der Einfluß von verrauschten oder stark verzögerten Abstandsdaten minimiert wird.

Für alle Taktzeitpunkte $n \geq k$ wird ein stationärer Zustand erreicht, während dessen die Relativgeschwindigkeit Vrel n gemäß der Formel Vrel $n = \dfrac{a_{\text{ist } n} - a_{\text{ist } n-i}}{i \cdot \Delta t}$ berechnet wird, wobei i eine vorgegebene ganze Zahl ist. Im Unterschied zu der oben beschriebenen Anlaufphase erfolgt die Berechnung der Relativgeschwindigkeit während des stationären Zustandes für alle Taktzeitpunkte n auf Grundlage von Abstandswerten, die um einen festen Zeitbetrag $i \cdot \Delta t$ auseinanderliegen. Auf diese Weise wird sichergestellt, daß jeder berechnete Wert für die Relativgeschwindigkeit Vrel n auf einer gleichartigen Mittelung von gemessenen Abstandswerten basiert und deshalb als relativ zuverlässig angesehen werden kann.

Es ist weiterhin vorteilhaft, daß die berechnete Relativgeschwindigkeit vor ihrer Ausgabe zur Weiterverarbeitung tiefpaßgefiltert wird. Die Tiefpaßfilterung hat eine integrierende und damit glättende Wirkung auf die berechneten Werte für die Relativgeschwindigkeit.

Es ist von Vorteil, daß bei einem zeitweisen Ausfall von gemessenen Abstandswerten geeignete Abstandswerte geschätzt werden. Auf diese Weise wird verhindert, daß der Abstandsregelung Null-Werte für den gemessenen Abstand zur Verfügung gestellt werden, und daß die Regelung deshalb falsche Ergebnisse liefert. Durch die Bereitstellung von Schätzwerten kann die Regelung mit akzeptablen Daten weitergeführt werden.

Schließlich ist es von Vorteil, daß die Schätzung unter der Voraussetzung erfolgt, daß sich die Geschwindigkeit des vorausfahrenden Fahrzeugs nicht ändert. Diese Annahme gewährleistet ebenfalls, daß die Abstandsdaten, auf denen die Regelung basiert, keine allzu großen Sprünge aufweisen, und daß deshalb auch die Regelgröße keine unerwünschten Schwankungen aufweist.

Die oben genannte Aufgabe der Erfindung wird außerdem dadurch gelöst, daß eine Vorrichtung der eingangs genannten Art eine Berechnungseinheit zum Berechnen der Relativgeschwindigkeit zwischen zwei Fahrzeugen, insbesondere gemäß dem oben genannten Verfahren aufweist. Diese Vorrichtung weist dieselben Vorteile auf, wie sie oben für das Verfahren erwähnt wurden.

Der Beschreibung sind die Fig. 1 bis 3 beigefügt, wobei

Fig. 1    ein Blockschaltbild zur Berechnung der Relativgeschwindigkeit gemäß der vorliegenden Erfindung;

Fig. 2    ein Blockschaltbild zur Berechnung des Sollabstandes aus der Relativgeschwindigkeit gemäß der Erfindung; und

Fig. 3    ein Blockschaltbild einer Abstandsregelung gemäß dem Stand der Technik.

zeigen.

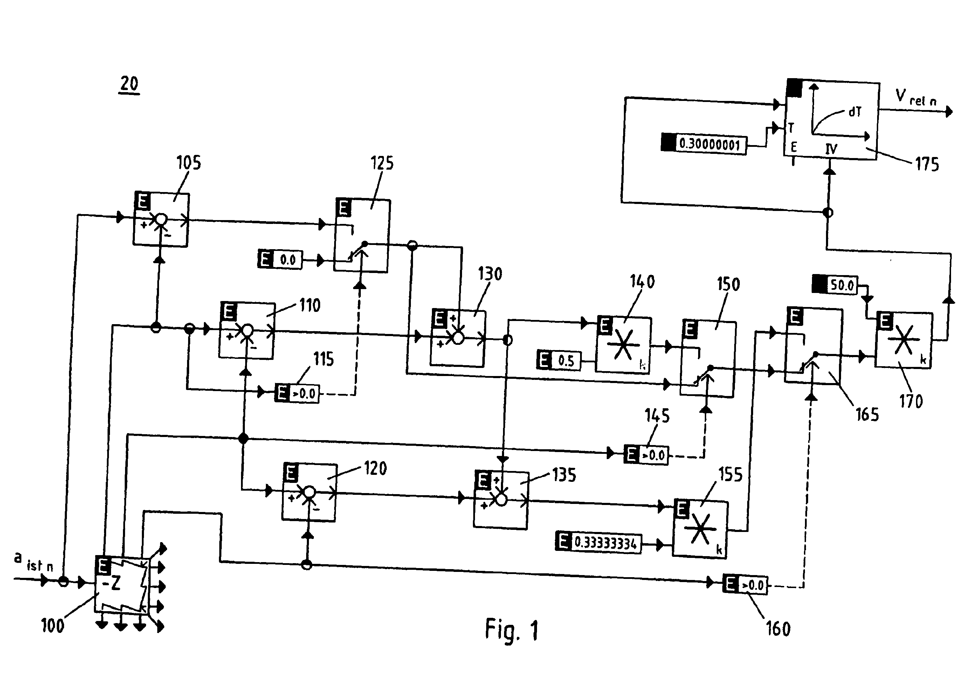

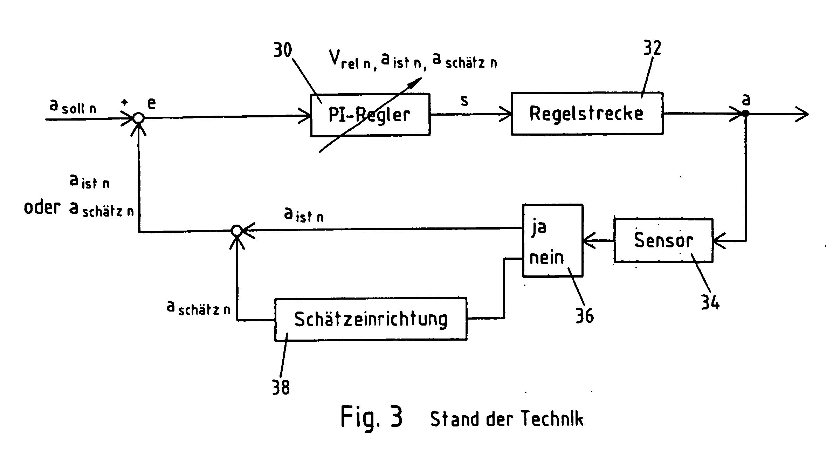

Es folgt eine ausführliche Beschreibung eines bevorzugten Ausführungsbeispiels der vorliegenden Erfindung unter Bezugnahme auf Fig. 1.

Gemessene aktuelle Istabstände aist n zwischen zwei Fahrzeugen werden zunächst sukzessive einem Schieberegister 100 zugeführt, welches die eingegebenen Abstandswerte zwischenspeichert und um jeweils eine Takteinheit $\Delta t$ verzögert wieder ausgibt. Somit stehen an dem Ausgang des Schieberegisters 100 die zu den Zeitpunkten n-1, n-2, ... gemessenen Istabstände aist n-1, aist n-2 ... zur Verfügung. Ein Subtrahierer 105 dient zum Subtrahieren des von dem Schieberegister 100 ausgegebenen Istabstandes aist n-1 zum Zeitpunkt n-1 von dem aktuell gemessenen Istabstand aist n. Die Differenz am Ausgang des Subtrahierers 105 wird auf einen Eingang eines Umschalters 125 gegeben. Ein anderer Eingang des Umschalters 125 ist mit dem festen Wert 0 vorbelegt. Für den Fall, daß ein Vergleicher 115 feststellt, daß der von dem Schieberegister 100 ausgegebene Istabstand aist n-1 größer ist als 0, wird der Ausgang des Umschalters 125 mit demjenigen seiner Eingänge verbunden, an welchem der Ausgang des Subtrahierers 105 anliegt. Anderenfalls liegt an dem Ausgang des Umschalters 125 der vorgegebene Wert 0 an.

Ein Subtrahierer 110 bildet die Differenz zwischen den von dem Schieberegister 100 ausgegebenen Istabständen aist n-1 und aist n-2. Die Differenz am Ausgang des Subtrahierers 110 wird in dem Addierer 130 zu dem Ausgang des Umschalters 125 hinzuaddiert. Ein Subtrahierer 120 bildet die Differenz aus den von dem Schieberegister 100 ausgegebenen Istabständen aist n-2 und aist n-3 zu den Zeitpunkten n = n-2 und n = n-3. Die Differenz an seinem Ausgang wird in einem Addierer 135 zu dem Wert am Ausgang des Addierers 130 hinzuaddiert. Die Summe am Ausgang des Addierers 135 wird in einer Multipliziereinrichtung 155 mit dem Faktor 1/3 multipliziert und das Ergebnis wird auf einen Eingang des Umschalters 165 gegeben. Der Ausgang des Addierers 130 wird in einer Multipliziereinrichtung 140 mit dem konstanten Faktor 0,5 multipliziert und das Ergebnis wird an einen Eingang eines Umschalters 150 gelegt. An einem zweiten Eingang des Umschalters 150 liegt der Ausgang des Umschalters 125. Für den Fall, daß eine Vergleichseinrichtung 145 feststellt, daß das von dem Schieberegister 100 ausgegebene Istabstands-Signal aist n-2 größer als 0 ist, wird der Ausgang des Umschalters 150 auf den Ausgang der Multipliziereinrichtung 140 durchgeschaltet. Anderenfalls wird der Ausgang des Umschalters 150 auf den Ausgang des Umschalters 125 durchgeschaltet. Der Ausgang des Umschalters 150 liegt auf einem weiteren Eingang des Umschalters 165. In dem Fall, daß eine Vergleichseinrichtung 160 feststellt, daß der von dem Schieberegister 100 ausgegebene Wert für den Istabstand aist n-3 größer als 0 ist, wird der Ausgang des Umschalters 165 auf den Ausgang der Multipliziereinrichtung 155 durchgeschaltet. Anderenfalls wird der Ausgang des Umschalters 165 auf den Ausgang des Umschalters 150 durchgeschaltet.

Der Ausgang des Umschalters 165 wird mit Hilfe der Multipliziereinrichtung 170 mit einem konstanten Faktor 50 multipliziert und am Ausgang der Multipliziereinrichtung 170 liegt im wesentlichen bereits die zu berechnende Relativgeschwindigkeit an. Der Ausgangswert der Multipliziereinrichtung 170 wird abschließend mit Hilfe eines Tiefpaßfilters 175 tiefpaßgefiltert.

Es folgt eine detaillierte Beschreibung der Funktionsweise der Schaltung gemäß Fig. 1 wobei zwischen einer Anlaufphase und einem stationären Zustand unterschieden wird.

Die Schaltung berechnet die Relativgeschwindigkeit grundsätzlich als Differenzenquotienten aus der Differenz zwischen zwei gemessenen Abstandswerten und dem jeweils zwischen den beiden Abstandswerten liegenden Zeitintervall. Dabei ist es grundsätzlich nicht erforderlich, daß die beiden zur Differenzbildung herangezogenen Abstandswerte an zwei aufeinander folgenden Taktzeitpunkten n und n + 1 gemessen werden, und daß dementsprechend das dazwischen liegende Zeitintervall nur eine Zeiteinheit $\Delta t$ beträgt. Vielmehr werden auch Abstandswerte zur Differenzbildung herangezogen, welche jeweils zu Taktzeitpunkten gemessen werden, die mehr als eine Zeiteinheit $\Delta t$ auseinanderliegen.

Die Anlaufphase wird immer dann durchlaufen, wenn nach einer längeren Zeit, d.h. für die beispielhafte Schaltung gemäß Fig. 1 zumindest für vier Zeittakteinheiten, keine verwertbaren Abstandswerte zur Verfügung standen. Es wird vorausgesetzt, daß der Abstandssensor in diesen Fällen regelmäßig den Abstandswert 0 als Istabstand ausgibt. Wenn dann zu einem Zeitpunkt n = 0 erstmalig ein verwertbarer Istabstand aist 0 mit aist 0 > 0 als Abstand zwischen einem Fahrzeug und einem neuerlich vorausfahrenden Fahrzeug ermittelt wird, so markiert dieser Zeitpunkt n = 0 den Beginn der Anlaufphase. In den darauf folgenden Taktzeitpunkten n > 1 werden jeweils aktuelle Istabstände berechnet und dem Eingang des Schieberegisters 100 in Fig. 1 zugeführt.

Während der Anlaufphase berechnet die Schaltung gemäß Fig. 1 die Relativgeschwindigkeit für Taktzeitpunkte n mit k > n ≥ 1 variabel gemäß der Formel

$$\text{Vrel n} = \frac{a_{\text{ist } n} - a_{\text{ist } 0}}{n \cdot \Delta t} \tag{1}$$

Die Variable k ist eine vorbestimmte ganze Zahl und k-1 bezeichnet den letzten Taktzeitpunkt während der Anlaufphase. Für die Schaltung gemäß Fig. 1 ist k = 4; die Variable k kann jedoch bei entsprechender Schaltungsvariation sowohl größer wie auch kleiner realisiert werden.

Wie aus der Formel (1) ersichtlich, ermöglicht die Schaltung gemäß Fig. 1 die Berechnung der Relativgeschwindigkeit schon zum Zeitpunkt n = 1 als Vrel 1 auf Grundlage der zwei aufeinander folgenden Istabstände aist 1 und aist 0 zu den Taktzeitpunkten n = 1 und n = 0. Damit steht bereits sehr schnell nach Beginn der Anlaufphase bereits ein erster Wert für die Relativgeschwindigkeit zur Verfügung.

Die nachfolgenden Werte für die Relativgeschwindigkeit berechnen sich gemäß der Formel (1) als Differenzenquotient für n < 4 jeweils auf Grundlage der gemessenen Istabstände aist n und aist 0, also zu den Zeitpunkten n = n und n = 0. Die eventuell zwischenzeitlich gemessenen Abstandswerte zu den Taktzeitpunkten n = 1 bis n = k -1 bleiben gemäß der Formel (1) für die Berechnung der Relativgeschwindigkeit während der Anlaufphase außer Betracht. Dadurch, daß bei der Berechnung der Relativgeschwindigkeit gemäß Formel (1) die zwischenzeitlich gemessenen Abstandswerte außer Betracht bleiben, ergibt sich mit größeren Werten für n eine variable Mittelwertbildung für die Abstandswerte und damit für die Werte der Relativgeschwindigkeit, wodurch insbesondere die Auswirkungen von stark verrauschten oder stark verzögerten gemessenen Abstandswerten auf die berechneten Werte für die Relativgeschwindigkeit sukzessive stärker minimiert werden.

Durch die Berechnung der Relativgeschwindigkeit gemäß der Formel (1) während der Anlaufphase wird derjenige Teil der oben definierten Aufgabe der Erfindung gelöst, der darauf abzielt, daß Werte für die Relativgeschwindigkeit bereits möglichst schnell nach erstmaligem Erfassen eines neuen Zielobjektes bzw. eines vorausfahrenden Fahrzeugs zur Verfügung gestellt werden. Weil zu Beginn der Anlaufphase erst sukzessive verwertbare Abstandswerte $a_{ist\,n}$ für die Taktzeitpunkte n > 0 ermittelt werden und vorher alle Abstandswerte 0 waren, ist eine Mittelung der Abstandswerte und damit der Relativgeschwindigkeit nicht schon von Beginn der Anlaufphase an möglich. Vielmehr ist eine Mittelwertbildung der Abstandswerte über mehrere Taktzeitpunkte hinweg erst dann möglich, wenn auch für diesen Zeitraum geeignete Abtastwerte zur Verfügung stehen. Um der gestellten Aufgabe der einerseits schnellen Bereitstellung von Werten für die Relativgeschwindigkeit und andererseits einer Erhöhung ihrer Zuverlässigkeit gerecht zu werden, besteht deshalb die Lösung dieser Aufgabe gemäß der Formel (1) in einer sukzessiven Ausweitung des Zeitintervalls, über dem die Mittelwertbildung der gemessenen Abstandswerte stattfindet, für die Taktzeitpunkte n mit k > n ≥ 1.

Sobald eine ausreichende Anzahl von in der Vergangenheit gemessenen Abstandswerten zur Verfügung steht, ist für alle zukünftig berechneten Relativgeschwindigkeiten eine einheitliche Mittelwertbildung über ein festes Zeitintervall möglich. Es wird dann von einem stationären Zustand gesprochen, währenddessen die Relativgeschwindigkeit $V_{rel\,n}$ für alle n ≥ k wie folgt berechnet wird:

$$Vrel\ n = \frac{a_{ist\,n} - a_{ist\,n-i}}{i \cdot \Delta t} \qquad (2)$$

In der Formel (2) bezeichnet die Variable i eine ganze Zahl, welche die Breite des Zeitintervalls definiert, über welches die Mittelwertbildung der Relativgeschwindigkeit $V_{rel\,n}$ für alle n ≥ k erfolgen soll.

Weil bereits von Beginn des stationären Zustandes an auswertbare Abstandswerte > 0 für die Istabstände zwischen den beiden Fahrzeugen zur Verfügung stehen, ist es möglich, daß die zu jedem Taktzeitpunkt n > k berechnete Relativgeschwindigkeit $V_{rel\,n}$ auf über ein großes Zeitintervall gemittelten Abstandswerten basiert und somit zuverlässig ist.

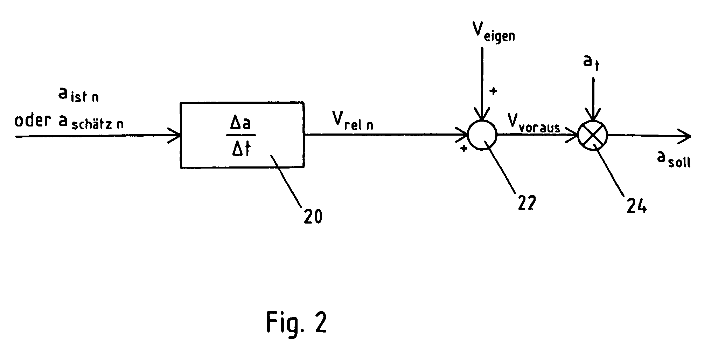

Die gemäß Fig. 1 berechnete Relativgeschwindigkeit $V_{rel\,n}$ dient gemäß Fig. 2 zur Berechnung eines Sollabstandes $a_{soll\,n}$ als Führungsgröße für die aus dem Stand der Technik bekannte Regelung gemäß Fig. 3.

Der Sollabstand zwischen zwei Fahrzeugen muß nicht notwendigerweise eine konstante Weggröße, z.B. angegeben in Metern, sein, sondern kann auch ein zeitlich konstanter Abstand $a_t$ sein. In letzterem Fall soll die Zeit, welche bis zum Erreichen des vorausfahrenden Fahrzeugs benötigt wird, unabhängig von der Eigengeschwindigkeit des Fahrzeugs konstant bleiben. Dies hat zur Folge, daß sich ein als Weggröße angegebener Sollabstand $a_{soll}$ in Abhängigkeit von der Eigengeschwindigkeit $V_{eigen}$ des Fahrzeugs und/oder in Abhängigkeit der Relativgeschwindigkeit zwischen den beiden Fahrzeugen ändert.

Ein Berechnungsschema für einen als Weggröße bemessenen Sollabstand $a_{soll}$ bei vorgegebenem zeitlich konstanten Abstand $a_t$ ist in Fig. 2 angegeben. Dort wird die Berechnung der Relativgeschwindigkeit $V_{rel\,n}$ gemäß Fig. 1 durch die Differenziereinrichtung 20 symbolisiert. Die berechnete Relativgeschwindigkeit $V_{rel\,n}$ wird in einer Addiereinrichtung 22 mit der als gegeben angenommenen Eigengeschwindigkeit $V_{eigen}$ des Fahrzeugs addiert und die auf diese Weise als Summe berechnete Geschwindigkeit $V_{voraus}$ des vorausfahrenden Fahrzeugs wird nachfolgend in einer Multipliziereinrichtung 24 mit dem vorgegebenen zeitlich konstanten Abstand $a_t$ (in Sekunden) multipliziert. Am Ausgang der Multipliziereinrichtung 24 steht dann der variable als Weggröße bemessene Sollabstand $a_{soll\,n}$ als Führungsgröße für den Regelkreis gemäß Fig. 3 zur Verfügung.

Die am Ausgang der Differenziereinrichtung 20 ermittelte Relativgeschwindigkeit $V_{rel\,n}$ dient nicht nur zur Berechnung des Sollabstandes, sondern auch als Parameter der Regeleinrichtung 30 in Fig. 3 zur Entscheidung für einen ggf. erforderlichen Bremseingriff. Ein derartiger Bremseingriff wird u.a. notwendig, wenn der Abstand zum vorausfahrenden Fahrzeug im nicht stationären Zustand einen kritischen Wert unterschreitet, d.h. wenn sich das Fahrzeug zu schnell an das vorausfahrende Fahrzeug annähert, z.B. weil letzteres gebremst hat.

**Patentansprüche**

**1.** Verfahren zum Ermitteln der Relativgeschwindigkeit $V_{rel}$ zwischen zwei Fahrzeugen, mit folgenden Schritten:

- Messen des Abstandes aist n-3, ..., aist n zwischen den Fahrzeugen zu definierten Taktzeitpunkte n -3, ... n, die jeweils im Abstand einer Zeiteinheit $\Delta$t aufeinanderfolgen und
- Berechnen der Relativgeschwindigkeit Vrel n als Differenzenquotient aus der Differenz zwischen zwei gemessenen Abstandswerten und dem zwischen den beiden Abstandswerten liegenden Zeitintervall,

wobei nach einem erstmaligen Erfassen des Abstandes aist 0 und aist 0 > 0 zwischen den Fahrzeugen zum Zeitpunkt n = 0 die Berechnung der Relativgeschwindigkeit Vrel n für nachfolgende Zeitpunkte n mit k > n $\geq$ 1 und mit k $\geq$ 3 als einer vorbestimmten ganzen Zahl, variabel gemäß der Formel

$$Vrel\ n = \frac{a_{ist\ n} - a_{ist\ 0}}{n \cdot \Delta t}$$

erfolgt, und

wobei für Zeitpunkte n $\geq$ k, für die ein stationärer Zustand erreicht ist, währenddessen die Relativgeschwindigkeit Vrel n wie folgt berechnet wird:

$$Vrel\ n = \frac{a_{ist\ n} - a_{ist\ n\ -\ i}}{i \cdot \Delta t}$$

mit i als einer vorgegebenen ganzen Zahl.

2. Verfahren nach Anspruch 1, **dadurch gekennzeichnet, daß** die ermittelte Relativgeschwindigkeit Vrel n vor ihrer Ausgabe zur Weiterverarbeitung tiefpaßgefiltert wird.

3. Verfahren nach einem der vorhergehenden Ansprüche, **dadurch gekennzeichnet, daß** bei einem zeitweisen Ausfall von gemessenen Abstandswerten geeignete Abstandswerte geschätzt werden.

4. Verfahren nach Anspruch 3, **dadurch gekennzeichnet, daß** die Schätzung der Abstandswerte unter der Voraussetzung erfolgt, daß sich die Geschwindigkeit des vorausfahrenden Fahrzeugs nicht ändert.

5. Vorrichtung mit einem Sensor zum Messen des Abstandes zwischen den beiden Fahrzeugen und einer Berechnungseinheit zum Berechnen der Relativgeschwindigkeit zwischen den beiden Fahrzeugen gemäß dem Verfahren nach einem der Ansprüche 1 bis 4, auf Grundlage der gemessenen Abstandswerte.

**Claims**

1. Method for determining the relative speed Vrel between two vehicles, comprising the following steps:

- measuring the distance aist n-3, ..., aist n between the vehicles at defined clock times n-3, ..., n which follow one another at an interval of a time unit $\Delta$t in each case, and
- calculating the relative speed Vrel n as a difference quotient from the difference between two measured distance values and the time interval between the two distance values,

wherein the relative speed Vrel n for subsequent times n, where k>n$\geq$1 and where k$\geq$3 is a predetermined integer, is calculated variably according to the formula

$$Vrel\ n = \frac{a_{ist\ n} - a_{ist\ 0}}{n \cdot \Delta t}$$

after the distance aist 0, where aist 0>0, between the vehicles is detected for the first time at time n=0, and

wherein a stationary state is reached for times n$\geq$k, during which stationary state the relative speed Vrel n is calculated as follows:

$$Vrel\ n = \frac{a_{ist\ n} - a_{ist\ n-1}}{i \cdot \Delta t}$$

where i is a predefined integer.

2. Method according to Claim 1, **characterized in that** the determined relative speed Vrel n is low-pass-filtered before being output for further processing.

3. Method according either of the preceding claims, **characterized in that** suitable distance values are estimated when measured distance values are temporarily missing.

4. Method according to Claim 3, **characterized in that** the distance values are estimated under the assumption that the speed of the vehicle travelling in front does not change.

5. Apparatus having a sensor for measuring the distance between the two vehicles, and a calculation unit for calculating the relative speed between the two vehicles in accordance with the method according to one of Claims 1 to 4 on the basis of the measured distance values.

**Revendications**

1. Procédé de détermination de la vitesse relative $V_{rel}$ entre deux véhicules, lequel procédé comprend les étapes suivantes :

- mesure de la distance $a_{ist}$ n-3, ... , $a_{ist}$ n entre les véhicules à des instants cadencés définis n-3, ..., n qui se suivent tous à un intervalle d'une unité de temps $\Delta t$ et
- calcul de la vitesse relative $V_{rel}$ n comme quotient de la différence entre deux valeurs de distance mesurées et de l'intervalle de temps écoulé entre les deux valeurs de distance,

et dans lequel, après une première détermination de la distance $a_{ist}$ 0 et si $a_{ist}$ 0 > 0 entre les véhicules à l'instant n = 0, le calcul de la vitesse relative $V_{rel}$ n pour les instants suivants n, où k > n $\geq$ 1 et k $\geq$ 3 comme nombre entier prédéterminé, s'effectue selon la formule:

$$Vrel\ n = \frac{a_{ist\ n} - a_{ist\ 0}}{n \cdot \Delta t}$$

tandis qu'aux instants n $\geq$ k pour lesquels un état stationnaire est atteint, la vitesse relative $V_{rel}$ n est calculée de la façon suivante :

$$Vrel\ n = \frac{a_{ist\ n} - a_{ist\ n-i}}{i \cdot \Delta t}$$

où i est un nombre entier prédéterminé.

2. Procédé selon la revendication 1, **caractérisé en ce que** la vitesse relative $V_{rel}$ n subit un filtrage passe-bas avant d'être envoyée à la poursuite de son traitement.

3. Procédé selon l'une des revendications précédentes, **caractérisé en ce qu'**en cas d'absence temporaire de valeurs de distance mesurées, des valeurs de distance appropriées sont estimées.

**4.** Procédé selon la revendication 3, **caractérisé en ce que** l'estimation des valeurs de distance s'effectue en respectant la condition que la vitesse du véhicule qui circule avant l'autre ne se modifie pas.

**5.** Dispositif doté d'un détecteur de mesure de la distance entre les deux véhicules et d'une unité de calcul qui, à partir des valeurs de distance mesurées, calcule la vitesse relative entre les deux véhicules par le procédé selon l'une des revendications 1 à 4.

Fig. 1

EP 1 111 393 B1

Fig. 3   Stand der Technik

$a_{ist\ n}$
oder $a_{schätz\ n}$

$V_{eigen}$

$a_t$

$$\frac{\Delta a}{\Delta t}$$

$V_{rel\ n}$

$V_{voraus}$

$a_{soll}$

20

22

24

Fig. 2